# EUROPEAN PATENT SPECIFICATION

(11) **EP 1 759 828 B1**
(45) Date of publication and mention of the grant of the patent: **09.12.2009**
(21) Application number: 06117962.8
(22) Date of filing: 27.07.2006
(51) Int. Cl.: B29C 57/02, F16L 21/03

(54) **Packing for a connection joint between tubes**
Dichtungsanordnung für eine Rohrverbindung
Garniture d'étanchéité pour un raccord de tuyaux

(30) Priority: 29.07.2005 IT UD20050127
(43) Date of publication of application: 07.03.2007
(73) Proprietor: Plebani, Daniela, 25031 Capriolo BS (IT)
(72) Inventor: Plebani, Daniela, 25031 Capriolo BS (IT)
(74) Representative: Petraz, Gilberto Luigi

(56) References cited:
- EP-B1- 0 243 331
- US-A- 4 030 872
- US-A- 4 299 412

## Description

### FIELD OF THE INVENTION

The present invention concerns a packing usable to make a joint, of the type called in technical jargon "socket-type", between two coaxial tubes made of rigid plastic material, respectively one internal and one external. The purpose of the packing according to the present invention is to guarantee the hydraulic seal and positioning of the two tubes, so that the two tubes substantially constitute a continuous module through which a pressurized fluid can flow, without the risk of leaks or drawing. To be more exact, the packing according to the present invention comprises at least a first external ring, made of elastomeric material and positioned in contact with the two tubes to guarantee the seal, and a second internal ring made of rigid plastic material, which serves as a reinforcement element for the external ring, and keeps it correctly positioned with respect to the external tube.

### BACKGROUND OF THE INVENTION

In connection joints between two coaxial tubes called "socket type", a tube which is external during use is inserted hot over an annular packing made of elastomeric material, which has a conical shaping facing towards the outside and defining an ascent ramp and a descent ramp for the hot tube.

When the hot tube is inserted, the packing thus becomes the element that forms the socket, and thus, when the formation of the tube is concluded, it is solid with the socket and unremovable.

In the operating step of forming the socket, the annular packing is subjected to considerable stresses, both of deformation and of displacement, which can determine an imprecise coupling of the packing and the socket, with consequent problems in the use of the connected tubes.

To overcome this problem, solutions have been proposed in which the annular packing is equipped with a reinforcement element made of rigid or semi-rigid material, the function of which is to limit to the utmost the deformations thereof, especially in the step of inserting the hot tube and the forming of the socket.

A first type of reinforced packing for socket joints is for example that described in the European patent EP-B-0243331, which comprises a shaped ring formed by two parts welded together, that is, a reinforcement part, made of rigid polypropylene, shaped with a conical external segment to facilitate the axial insertion of the external tube thereon, and having a plurality of breaks to increase the flexibility thereof; and a sealing part made of elastomeric material.

However, these known packings are considerably fragile in the reinforcement part made of rigid polypropylene, also due in part to the breaks, with the possibility that they can break in the steps of coupling the two tubes.

A second type of reinforced packing of a known type consists of an annular element made of elastomeric material, provided inside with a substantially toroidal reinforcement metal round piece.

In this case, the metal round piece partly deforms the conical zone of the sealing lip, comprising the sliding of the packing during the ascent of the hot tube in the socket-forming step, with consequent risks of jamming of the tube and sinking or curling of the packing.

A third type of known packing, as in the previous case, has an annular element made of elastomeric material with a conical external surface and uses, as a reinforcement element, a conical metal plate disposed below said conical external surface. The metal plate can, however, be permanently deformed, if subjected to excessive stresses, for example during the transport and working steps, thus making the subsequent assembly difficult or impossible.

In any case, during the forming step of the socket, it is difficult to keep the rubber annular element correctly positioned with respect to the metal reinforcement element, and thus uncovered zones may be created, distributed over the circumference, where the metal reinforcement is in contact with the environment, with consequent possible oxidation, which leads to a rapid deterioration thereof.

US-A-4 299 412 **discloses a packing for a connection joint between two coaxial tubes having the features of the preamble of the main claim.**

A purpose of the present invention is to achieve a packing for a joint of the so-called socket type, which guarantees the structural and hydraulic seal of the coupling between the tubes, and including an internal reinforcement part resistant to stresses, at least partly elastically deformable, so as not to influence the sealing action of the elastomeric annular part, and so as not to be subjected to oxidation, even if momentarily put in contact with the outer environment.

The Applicant has devised, tested and embodied the present invention to overcome the shortcomings of the state of the art and to obtain these and other purposes and advantages.

### SUMMARY OF THE INVENTION

The present invention is set forth and characterized in the main claim, while the dependent claims describe other characteristics of the invention or variants to the main inventive idea.

In accordance with the above purpose, a packing according to the present invention, to make a socket joint between two coaxial tubes made of plastic material, comprises at least a first sealing element, substantially annular, made of elastomeric material, and provided with a central body defining, in cross section, a substantially conical external surface, and at least a sealing lip, opposite the conical external surface, at least partly deformable and able to contact, during use, an internal tube of the two tubes.

The packing according to the present invention also comprises a second element with a stiffening function, also substantially annular and inserted inside a suitable seating made in the first elastomeric annular element.

The second stiffening element, in cross section, has a conical external surface substantially mating with the conical surface of the elastomeric element.

According to a characteristic feature of the present invention, the second stiffening element is made of hard and resistant plastic material.

Since the second stiffening element is made of non-toxic plastic material, on the one hand it is not subject to any risk of oxidation, and on the other hand can resist external forces of a certain entity, at least as they normally occur during the insertion of the hot tube for forming the socket, without deforming permanently or breaking easily.

Advantageously, said stiffening element has a triangular or pentagonal shape in cross section, with the apex, during use, facing towards the outside. In another preferential embodiment the stiffening element has a solid cross-section at least for a substantial part of its inner volume.

According to the invention, the stiffening element has at least an inclined part adjacent to said apex and having an inclination mating with that of the ascent ramp of the sealing element.

According to a variant, the stiffening element is made of plastic material to which substances to accentuate the rigidity have been added. For example, the stiffening element is made of polyoxymethylene, or other similar polymer, with the addition of pigments, stabilizers and additives.

In a preferential form of embodiment of the present invention, the annular housing seating of the elastomeric element is made in a position such as to maintain the stiffening element substantially at the centre of gravity of the cross section of the packing.

In this way, the stiffening element is able both to strengthen the entire structure of the packing, and also to adequately support the elastomeric element, keeping it correctly positioned and preventing harmful deformation and jamming thereof during the step of inserting the hot tube and forming the socket joint.

### BRIEF DESCRIPTION OF THE DRAWINGS

These and other characteristics of the present invention will become apparent from the following description of a preferential form of embodiment, given as a non-restrictive example with reference to the attached drawings wherein:

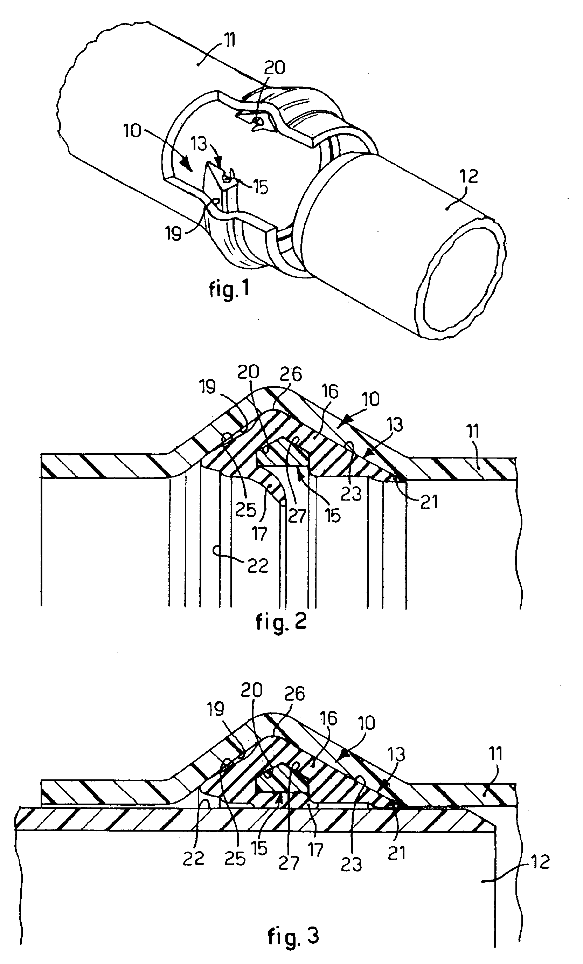

- fig. 1 is a three-dimensional view, partly sectioned, of a packing according to the present invention;
- fig. 2 shows an enlarged detail of fig. 1 in a first operating step;
- fig. 3 shows the detail of fig. 2 in a second operating step.

### DETAILED DESCRIPTION OF A PREFERENTIAL FORM OF EMBODIMENT

With reference to the attached drawings, a packing 10 according to the present invention is able to guarantee both the structural and hydraulic seal in a joint of the so-called socket type between an external tube 11 and an internal tube 12, to define a continuous pipe for the passage of a pressurized fluid, for example water.

The packing 10 is substantially annular in shape and comprises a sealing ring 13 made of elastomeric material and able to contact both tubes 11 and 12 in order to guarantee the seal of their coupling, and a stiffening ring 15 made of rigid plastic material and able to reinforce the structure of the packing 10 and to keep the sealing ring 13 always positioned in contact with the external tube 11.

To be more exact, the sealing ring 13 has a cross section including a central body 16 defining, on the outer side, a substantially conical external surface defining an ascent ramp 23 and a descent ramp 25, used to form the socket 19 in the step of inserting the hot external tube 11. The two ramps 23 and 25 are connected by a rounded apex 26 which determines the internal curve of the socket shaping 19 with precise coupling of shape between the sealing ring 13 and the tube 11 formed. While the ascent ramp 23 is smooth to facilitate the advance of the hot tube 11, in the forming step, the descent ramp 25 has a curve which confers elasticity on the central body 16.

On the opposite side of the conical surface, the sealing ring 13 has a sealing lip 17, elastically bendable, made in a piece on the central body 16 and able, in the step of inserting the smooth internal tube 12 into the external tube 11, to contact the stiffening ring 15 with a determinate pressure.

During the forming of the joint, the external tube 11 is mounted hot on the sealing ring 13, so that the sealing ring 13 is the element that forms the socket 19, thus guaranteeing the correct and secure positioning of the whole packing 10 with respect to the two tubes 11 and 12.

The central body 16 comprises, substantially at the centre of gravity, an annular seating 20 open towards the geometric center of the packing 10 and in which the stiffening ring 15 is housed.

The packing 10 also comprises a supporting lip 21 made on the side opposite the sealing lip 17, with respect to the annular seating 20, which during use simultaneously contacts both the external tube 11 and the internal tube 12. Advantageously, the supporting lip 21 protrudes slightly from the central body 16 towards the internal tube 12, so as to adhere to it better and guarantee a greater sealing effect of the coupling between the two tubes 11 and 12.

The central body 16 also comprises, on the side of the sealing lip 17, a step 22 able to allow, in the coupled condition of the tubes 11 and 12, a better bending of the lip 17 and consequently a better sealing action of the coupling between the two tubes 11 and 12.

The stiffening ring 15 has a bearing and reinforcing function for the entire packing 10, and is therefore able to resist the axial forces exerted during the insertion of the tubes 11 and 12, without deforming plastically (and can therefore recoup possible deformations created during the insertion of the external tube 11) and without moving with respect to the external tube 11.

The stiffening ring 15 is made of plastic material, for example polyoxymethylene, or similar polymers having good characteristics of strength.

Advantageously, the plastic material constituting the stiffening ring 15 is enriched with additives, and/or with stabilizers, which, in the event of deformations of the packing 10 due to external forces, tend to return the reinforcement ring 15 to the starting position.

It is not excluded that the plastic material constituting the stiffening ring 15 can be enriched with pigments.

The stiffening ring 15 has a triangular, pentagonal or diamond shape, in cross section, with the apex facing substantially towards the rounded apex 26 of the central body 16 of the elastomeric sealing ring 13.

Advantageously, the inclined external walls of the stiffening ring 15 have an equal inclination to, or at most only slightly different from, the inclination of the ramps 23 and 25 of the sealing ring 13, so that all the stresses that are discharged onto the sealing ring 13 during the insertion of the external tube 11 on the packing 10 are effectively supported by the stiffening ring 15

Since it is made of plastic material, as described above, possible deformations to which the stiffening ring 15 may be subjected during the forming step can be recouped elastically, so as to guarantee an extremely precise coupling of shape between the packing 10 and the socket shaping 19.

In the solution shown here, the stiffening ring 15 has a full section and its axis is displaced with respect to the axis passing through the apex 26 of the central body 16, towards the direction in which the external tube 11 is introduced, so as to form an adequate resistance to the displacement of the packing 10 when the hot tube 11 is introduced to pass over the ascent ramp 23.

It is clear, however, that modifications and/or additions of parts may be made to the packing 10 as described heretofore, without departing from the field and scope of the present invention.

For example, it comes within the field of the present invention to provide different forms and positions of the reinforcement ring 15, provided that it keeps its reinforcement characteristics for the whole packing 10.

It also comes within the field of the present invention to provide to use different materials from those cited above, provided that the sealing ring 13 is made of a material having characteristics of softness and elasticity, while the reinforcement ring 15 is made of a plastic material having characteristics of hardness, rigidity and resistance.

## Claims

1. A packing (10) for a connection joint between two coaxial tubes (11, 12), used to form a socket (19) type shaping in an external tube (11) inserted hot and to perform a sealing function remaining inside said socket (19) type shaping, and comprising at least a substantially annular sealing element (13), made of elastomeric material and provided with a central body (16) having a conical external surface defining at least an ascent ramp (23) for said external tube (11), and at least a sealing lip (17) at least partly deformable and able to contact, during use, an internal tube (12) inserted in said external tube (11), said packing also comprising a stiffening element (15), substantially annular and inserted inside an annular seating (20) made in said central body (16), wherein said stiffening element (15) is made of hard plastic material, and wherein said stiffening element (15) has a triangular, pentagonal or diamond shape in cross section, with the apex substantially facing towards the apex of the conical external surface of said central body (16), **characterized in that** said stiffening element (15) has at least an inclined part adjacent to said apex and having an inclination mating with that of said ascent ramp (23) of said sealing element (13).

2. A packing (10) according to claim 1, **characterized in that** said stiffening element (15) has a solid cross-section.

3. A packing (10) according to claim 1 or 2, **characterized in that** said annular seating (20) is made substantially at the centre of gravity with respect to the cross section of said sealing element (13), and is open towards the geometric center of said sealing element (13).

4. A packing (10) according to any preceding claim, **characterized in that** said plastic material of which said stiffening element (15) is made is enriched with additives able to confer characteristics of strength and resistance to external stresses on said stiffering element (15).

5. A packing (10) according to any preceding claim, **characterized in that** the axis of said stiffening element (15) is displaced with respect to the vertical axis passing through the apex (26) of said conical external surface, towards the direction of insertion of said external tube (11).

6. A packing (10) according to claim 1, **characterized in that** said central body (16) is shaped substantially like an upside-down V and comprises a supporting lip (21) made on the side opposite said sealing lip (17), with respect to said annular seating (20), and able to contact both said external tube (11) and said internal tube (12).

7. A packing (10) according to claim 6, **characterized in that** said supporting lip (21) protrudes from said central body (16) towards said internal tube (12).

8. A packing (10) according to claim 6 or 7, **characterized in that** said central body (16) also comprises, on the side of said sealing lip (17), a step (22) able to improve the deformation conditions of said sealing lip (17) in the coupled condition of said two tubes (11, 12).

## Patentansprüche

1. Dichtungsanordnung (10) für eine Rohrverbindung zwischen zwei koaxialen Rohren (11, 12), die verwendet wird, um eine muffenartige Formgebung (19) in einem äußeren Rohr (11) zu bilden, das heiß eingesetzt wird, um eine Dichtungsfunktion auszuüben, die im Inneren der muffenartigen Formgebung (19) bleibt, und die folgendes aufweist: zumindest ein im wesentlichen ringförmiges Dichtungselement (13), das aus elastomerem Material besteht und mit einem zentralen Körper (16) versehen ist, der eine konische Außenoberfläche besitzt, die zumindest eine ansteigende Rampe (23) für das äußere Rohr (11) bildet, und zumindest eine Dichtungslippe (17), die zumindest teilweise deformierbar ist und, im Gebrauch, in der Lage ist, mit einem inneren Rohr (12) in Kontakt zu kommen, das in das äußere Rohr (11) eingesetzt wird, wobei die Dichtungsanordnung außerdem ein Versteifungselement (15) aufweist, das im wesentlichen ringförmig ist und in das Innere eines ringförmigen Sitzes (20) eingesetzt ist, der in dem zentralen Körper (16) ausgebildet ist, wobei das Versteifungselement (15) aus hartem Kunststoffmaterial besteht und wobei das Versteifungselement (15) eine dreieckige, fünfeckige oder rautenförmige Gestalt im Querschnitt besitzt, wobei der Scheitel im wesentlichen zu dem Scheitel der konischen Außenoberfläche des zentralen Körpers (16) hin gerichtet ist,
**dadurch gekennzeichnet,**
**daß** das Versteifungselement (15) zumindest ein geneigtes Teil besitzt, das in der Nähe des Scheitels vorgesehen ist und das eine Neigung besitzt, die zu derjenigen der ansteigenden Rampe (23) des Dichtungselementes (13) paßt.

2. Dichtungsanordnung (10) nach Anspruch 1,
**dadurch gekennzeichnet,**
**daß** das Versteifungselement (15) einen massiven Querschnitt besitzt.

3. Dichtungsanordnung (10) nach Anspruch 1 oder 2,
**dadurch gekennzeichnet,**
**daß** der ringförmige Sitz (20) bezüglich des Querschnitts des Dichtungselementes (13) im wesentlichen im Schwerpunkt ausgebildet ist und zu dem geometrischen Zentrum des Dichtungselementes (13) hin offen ist.

4. Dichtungsanordnung (10) nach einem der vorhergehenden Ansprüche,
**dadurch gekennzeichnet,**
**daß** das Kunststoffmaterial, aus dem das Versteifungselement (15) besteht, mit Additiven angereichert ist, die in der Lage sind, dem Versteifungselement (15) im Hinblick auf äußere Beanspruchungen Festigkeit- und Widerstandseigenschaften zu verleihen.

5. Dichtungsanordnung (10) nach einem der vorhergehenden Ansprüche,
**dadurch gekennzeichnet,**
**daß** die Achse des Versteifungselementes (15) gegenüber der vertikalen Achse, die durch den Scheitel (26) der konischen äußeren Oberfläche hindurchgeht, zu der Richtung des Einsetzens des äußeren Rohres (11) hin verlagert ist.

6. Dichtungsanordnung (10) nach Anspruch 1,
**dadurch gekennzeichnet,**
**daß** der zentrale Körper (16) im wesentlichen wie ein umgekehrtes V geformt ist und eine Abstützungslippe (21) aufweist, die bezüglich des ringförmigen Sitzes (20) auf der der Dichtungslippe (17) gegenüberliegenden Seite ausgebildet ist und in der Lage ist, sowohl mit dem äußeren Rohr (11) als auch mit dem inneren Rohr (12) in Kontakt zu kommen.

7. Dichtungsanordnung (10) nach Anspruch 6,
**dadurch gekennzeichnet,**
**daß** die Abstützungslippe (21) von dem zentralen Körper (16) zu dem inneren Rohr (12) hin vorsteht.

8. Dichtungsanordnung (10) nach Anspruch 6 oder 7,
**dadurch gekennzeichnet,**
**daß** der zentrale Körper (16) außerdem an der Seite der Dichtungslippe (17) eine Stufe (22) aufweist, die in der Lage ist, die Deformationsbedingungen der Dichtungslippe (17) in dem verbundenen Zustand der beiden Rohre (11, 12) zu verbessern.

## Revendications

1. Garniture d'étanchéité (10) pour un joint de raccordement entre deux tubes coaxiaux (11, 12) utilisée pour former un façonnage du type emboiture (19) dans un tube externe (11) inséré à chaud et pour remplir une fonction d'étanchéité en restant à l'intérieur dudit façonnage du type emboiture (19), et comprenant au moins un élément d'étanchéité sensiblement annulaire (13), fabriqué dans un matériau élastomère et muni d'un corps central (16) ayant une surface externe conique définissant au moins une rampe ascendante (23) pour ledit tube externe (11), et au moins une lèvre d'étanchéité (17) au moins partiellement déformable et capable de mettre en contact, en cours d'utilisation, un tube interne (12) inséré dans ledit tube externe (11) ladite garniture d'étanchéité comprenant également un élément de renfort (15), sensiblement annulaire et inséré à l'intérieur d'un siège annulaire (20) prévu dans ledit corps central (16), ledit élément de renfort (15) étant fabriqué dans une matière plastique dure, et dans laquelle ledit élément de renfort (15) a une section efficace en forme de triangle, de pentagone ou de losange, dont le sommet fait sensiblement face au sommet de la surface externe conique dudit corps central (16), **caractérisée en ce que** ledit élément de renfort (15) a au moins une partie inclinée adjacente au dit sommet et a une inclinaison qui correspond avec celle de ladite rampe ascendante (23) dudit élément d'étanchéité (13).

2. Garniture d'étanchéité (10) selon la revendication 1, **caractérisée en ce que** ledit élément de renfort (15) présente une section efficace pleine.

3. Garniture d'étanchéité (10) selon la revendication 1 ou 2, **caractérisé en ce que** ledit siège annulaire (20) est prévu sensiblement au centre de gravité par rapport à la section efficace dudit élément d'étanchéité (13) et est ouvert vers le centre géométrique dudit élément d'étanchéité (13).

4. Garniture d'étanchéité (10) selon l'une quelconque des revendications précédentes, **caractérisée en ce que** ladite matière plastique dans laquelle est fabriqué ledit élément de renfort (15) est enrichi en additifs capable de conférer des caractéristiques de force et de résistance aux contraintes externes au dit élément de renfort (15).

5. Garniture d'étanchéité (10) selon l'une quelconque des revendications précédentes, **caractérisée en ce que** l'axe dudit élément de renfort (15) est déplacé par rapport à l'axe vertical passant par le sommet (26) de ladite surface externe conique, dans le sens de l'insertion dudit tube externe (11).

6. Garniture d'étanchéité (10) selon la revendication 1, **caractérisé en ce que** ledit corps central (16) a sensiblement la forme d'un V retourné et comprend une lèvre de support (21) prévue sur le côté opposé de ladite lèvre d'étanchéité (17), par rapport au dit siège annulaire (20), et capable de mettre en contact avec ledit tube externe (11) et ledit tube interne (12).

7. Garniture d'étanchéité (10) selon la revendication 6, **caractérisée en ce que** ladite lèvre de support (21) fait saillie à partir dudit corps central (16) vers ledit tube interne (12).

8. Garniture d'étanchéité (10) selon la revendication 6 ou 7, **caractérisée en ce que** ledit corps central (16) comprend également, du côté de ladite lèvre d'étanchéité (17) un épaulement (22) capable d'améliorer les conditions de déformation de ladite lèvre d'étanchéité (17) dans l'état couplé desdits deux tubes (11, 12).
